# EUROPEAN PATENT SPECIFICATION

(11) **EP 1 134 497 B1**
(45) Date of publication and mention of the grant of the patent: **01.03.2006**
(21) Application number: 00124405.2
(22) Date of filing: 08.11.2000
(51) Int. Cl.: F24B 1/02, F23B 30/10

(54) **High Thermal Efficiency oven fuelled with compressed wood shavings or pellets**
Ofen mit hohem thermischen Wirkungsgrad für gepresste Holzspäne oder für Brennstoffpellets
Four à efficacité thermique élevée fonctionnant au copeaux de bois comprimés ou à pastilles de combustible

(30) Priority: 14.03.2000 IT VR000024
(43) Date of publication of application: 19.09.2001
(73) Proprietor: Marana Forni di Marana Ferdinando, 37026 Pescantina VR (IT)
(72) Inventor: Marana, Ferdinando, 37069 Villafranca di Verona (IT)
(74) Representative: Petraz, Gilberto Luigi

(56) References cited:
- EP-A- 1 022 512
- US-A- 4 989 521
- US-A- 5 123 360
- US-A- 5 429 110

## Description

### TECHNICAL FIELD

The present invention concerns a pizza oven fuelled with compressed wood shavings or pellets.

More specifically, the present invention refers to an oven for the direct or indirect cooking of pizzas, bread, cakes or any other edible product, with a structure designed to obtain thermal uniformity inside the cooking chamber thanks also to the fuel used.

### BACKGROUND ART

It is a known fact that wood ovens, equipped with a combustion chamber accessible from the outside by means of an appropriate opening and communicating with a furnace in which vegetable fuel is placed, are used for cooking edible products.

Wood ovens present certain problems which can limit their field of application.

One problem derives from the fact that a wood oven must be periodically fed with vegetable fuel with consequent opening of the stoking door and inevitable heat dispersion.

Another problem is represented by the fact that combustion of woody material inevitably leads to the production of ash residues that often deposit on the floor of the oven and sometimes on the products themselves during cooking.

Document US-A-5429110 discloses a mobile pellet stove with thermal barrier and ventilated firepot, including a housing divided by a thermal barrier, which is defined by a spaced pair of partitions, into a hot compartment and a cold compartment. The hot compartment includes a ventilated firepot suspended within an air channel that communicates with the cold compartmente through the thermal barrier. The cold compartment is subdivided by a funnel into a fuel pellet storage compartment thereabove and an electrical compartment therebelow. This stove is of the forced air circulation type, and requires the presence of a blower for supplying air inside the hot compartment and for cooling the cold compartment where the electrical components are housed.

### DESCRIPTION OF THE INVENTION

The present invention intends to provide a pellet-fuelled pizza oven capable of consuming minimal quantities of fuel thus developing a considerable amount of heat evenly distributed inside the cooking chamber.

The present invention also intends to provide a pellet-fuelled pizza oven presenting, with respect to ovens according to the current technique, a large cooking chamber and a furnace with extremely limited dimensions.

This is achieved by means of a pellet-fuelled pizza oven having the features described in claim 1.

The dependent claims describe advantageous forms of embodiment of the invention.

The pellet-fuelled pizza oven according to the present invention consists of a structure, made from low heat dispersion material, designed to support a cooking chamber, equipped with an opening for the insertion and removal of products to be cooked, communicating with a furnace fuelled continuously with pellets from a tank.

According to the invention, the pellets consist of compressed briquettes of wood shavings with minute granulometry.

This fuel reaches the furnace in minimum predetermined doses in order to ensure a continuous supply of calorific energy.

The furnace therefore has extremely reduced dimensions leaving, without changing the overall dimensions of the oven, plenty of room for the cooking chamber which can contain a high number of products.

The controlled amount of fuel inside the furnace means that there is a very limited dispersion of ash residue, to the advantage of the products taken out of the oven which no longer have dirty surfaces.

Fuelling of the furnace can be achieved by gravity, positioning the tank containing the pellets above the oven and connecting it to the furnace by means of a duct equipped with a choking means, for example an on-off valve, to control the flow of fuel towards the oven.

According to another aspect of this invention, the fuel can be fed into the furnace by means of any appropriate operating machine receiving energy from a respective source of motion.

This operating machine can consist of an Archimedes' screw connected kinematically to an electric motor.

In addition to taking up very little room inside the furnace, the pellets, already used moreover in heating stoves, present a high calorific power and an extremely limited percentage of ashes.

Their reduced granulometry, around 6-7 millimetres, favours complete oxidation and combustion with a minimum risk of producing extremely harmful carbon monoxide.

The oven according to the invention also makes it possible to obtain another important advantage in terms of hygiene: in fact, thanks to the basically automatic infeed of the fuel, the operator is no longer obliged to come into manual contact either with the food or with the wood, as is the case with traditional wood ovens.

### DESCRIPTION OF THE DRAWINGS

Other features and advantages of the invention will become apparent on reading the following description of some forms of embodiment of the invention, given as non-limiting examples, with the help of the enclosed drawings, in which:

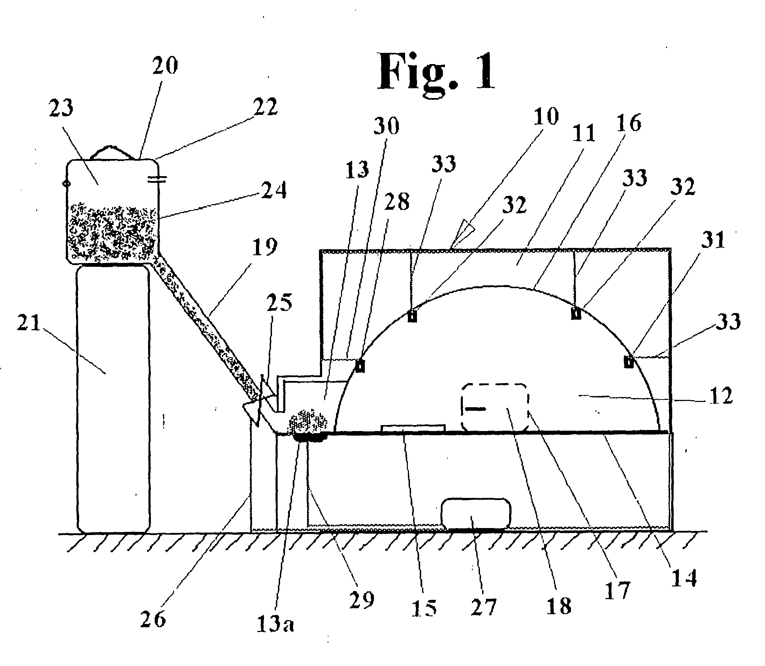

- figure 1 shows a front elevation and cross-section view of an oven according to the invention;
- figure 2 shows a front elevation and cross-section view of an oven according to another embodiment example.

### DESCRIPTION OF A FORM OF EMBODIMENT

In the figures, reference sign 10 generally indicates a pellet-fuelled pizza oven, in the case in question an oven 10 which consists of a structure 11, made from insulated material, designed to support a cooking chamber 12 communicating with a furnace 13.

The chamber 12 presents a floor 14 on which the products to be cooked 15 can be placed, and an upper closing wall 16 preferably having a concave vault configuration towards the interior of the oven 10 to ensure a good degree of uniform thermal gradient.

In its central part, close to the floor 14, the front wall of the oven 10 has an opening 17, fitted with a closing door 18, through which the products 15 can be inserted and removed.

The furnace 13 presents extremely reduced dimensions and communicates, by means of a duct 19, with a tank 20 supported by a respective framework 21 in order to raise it above the furnace 13 itself.

Moreover, according to an embodiment not illustrated in the figures, the furnace 13 can be positioned inside the cooking chamber 12.

The tank 20 can be fitted with a door 22 to close an opening 23 for loading the fuel which, for example, can consist of compressed briquettes of wood shavings called pellets 24.

The granulometry of the pellets 24 is normally around 6-7 millimetres in order to favour oxidation processes, limiting the risks of producing unburnt substances or harmful gases such as carbon monoxide.

The pellets 24 tend to fall by gravity from the tank 20 through the duct 19 which, preferably in the part close to the furnace 13, presents a choking means, for example an on-off valve 25, which controls the flow of fuel 24 towards the oven 10.

The choking means 25 can be a solenoid valve connected, by means of an electric cable 26, to an electronic unit 27 designed to control its functioning.

The furnace 13 can be equipped with a mass transducer 13a, which detects the amount of pellets 24 under combustion, and a temperature sensor 28 connected respectively by means of cables 29 and 30 to the electronic control unit 27.

The upper wall 16 of the oven 10 can also be equipped with temperature sensors and in particular intermediate 31 and upper sensors 32.

The sensors 31 and 32 detect the temperature in the cooking chamber 12 and send the relative signal, by means of the electric cables 33, to the electronic control unit 27.

The latter, receiving inputs from the various sensors 28, 31, 32, and from the transducer 13a, activates the appropriate opening of the on-off valve 25 in relation to the temperature of the furnace 13, of the cooking chamber 12 and of the mass of pellets 24 under combustion.

This ensures a minimum dose of fuel inside the furnace 13 with practically no dispersion of ash residue inside the chamber 12.

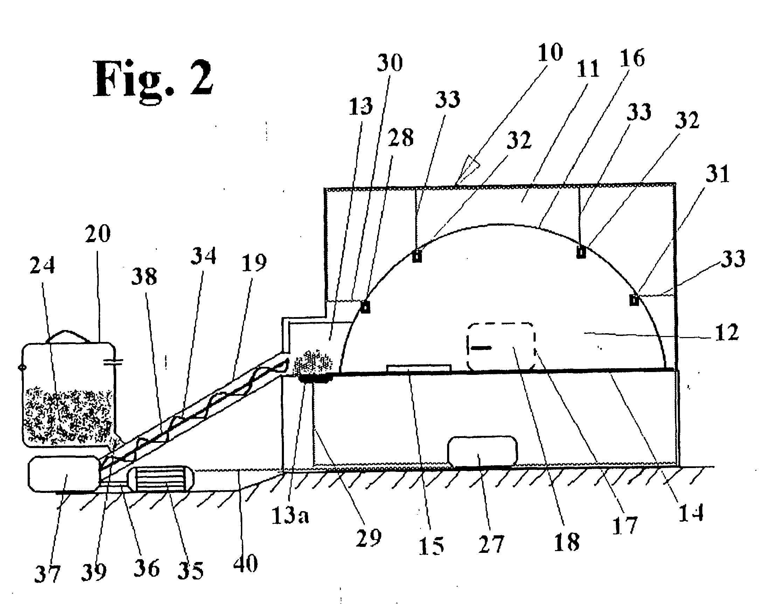

With reference to figure 2, another embodiment is shown, which foresees the positioning of the tank 20 in any area close to the oven 10 without necessarily being above the furnace 13.

In this case, the pellets 24 reach the furnace thanks to the action of an operating machine, for example a screw conveyor 34.

The latter is situated inside the duct 19 and is connected kinematically to an appropriate source of motion, for example an electric motor 35.

The motor 35 presents a drive shaft 36, which can be inserted in a reduction unit 37, connected kinematically to a shaft 38 of the screw conveyor 34.

The tank 20 presents a tube 39 communicating with the part of the conveyor 34 close to the reduction unit 37.

The pellets 24 pass through the tube 39 and reach the duct 19 where the action of the conveyor screw 34 carries them towards the furnace 13.

The electric motor 35 can be the traditional type, with a gearmotor and a rhythmic drive device, or the inverter type and connected, by means of an electric circuit 40, to the control unit 27.

In this way, the control unit 27 sets an appropriate rotation rhythm for the drive shaft 36 and consequently for the shaft 38 of the feeder screw 34 thus controlling the delivery of the fuel 24 to the furnace 13.

The electronic control unit 27 is connected to a small console (not shown in the drawings), clearly visible and accessible externally, equipped with displays which show the temperature values inside the cooking chamber 12 and the furnace 13 together with the amount of fuel 24 consumed.

The console can be equipped with a keyboard on which an operator can programme the functioning of the oven 10.

## Claims

1. A pizza oven (10) comprising a structure (11), made from low heat dispersion material, suitable for supporting a cooking chamber (12) having a floor (14) on which the products (15) to be cooked are placed, as well as an opening (17) for the insertion and removal of said products (15), and a furnace (13) suitable for housing wood to be combusted, said furnace (13) and said floor being substantially at the same level **characterised in that**
- said pizza oven has another aperture in correspondence of said furnace (13), said another aperture being connected to an external device for the infeed of wood pellets (24) into said furnace (13) from a respective tank (20);
- said pellets (24) consist of compressed briquettes of wood shavings with minute granulometry;
- a device controls the delivery of said pellets (24) fed into said furnace (13) according to minimum predetermined doses in order to ensure a minimum dose of fuel inside the furnace (13) with practically no dispersion of ash residue inside the chamber (12);
- said control device for the delivery of said pellets (24) consists of a choking means (25) involving said duct (19); and
- the interior of said cooking chamber (12) is fitted with temperature sensors (31, 32) connected to an electronic control unit (27) which governs the delivery of wood pellets (24) into the furnace (13).

2. A pizza oven (10) according to claim 1 **characterised in that** the granulometry of said pellets ranges between 6mm and 7mm.

3. A pizza oven (10) according to anyone of the preceding claims **characterised in that** an operating machine, receiving energy from a respective source of motion, conveys said pellets (24) from said tank (20) to said furnace (13).

4. A pizza oven (10) according to claim 3 **characterised in that** said operating machine consists of a screw conveyor (34) positioned inside said duct (19).

5. A pizza oven (10) according to anyone of claims 3 and 4 **characterised in that** said source of motion consists of an electric motor, for example with a gearmotor and a rhythmic drive device, or the inverter type (35).

6. A pizza oven (10) according to anyone of the preceding claims, **characterised in that** said furnace: (13) is equipped with a mass transducer (13a), designed to detect the amount of pellets (24) under combustion, connected to said control unit (27).

7. A pizza oven (10) according to anyone of the; preceding claims, **characterised in that** said choking means (25) consists of a solenoid valve connected to said electronic control unit (27).

8. A pizza oven (10) according to claim 5 **characterised in that** said electric motor (35) is connected to said electronic control unit (27).

9. A pizza oven (10) according to anyone of the preceding claims, **characterised in that** a console; clearly visible and accessible externally is provided with displays designed to show the temperature values inside said cooking chamber (12) and said furnace (13) together with the amount of fuel (24) consumed.

10. A pizza oven (10) according to claim 9 **characterised in that** said console is equipped with a keyboard for programming of the functioning of the oven (10) by an operator.

## Patentansprüche

1. Pizzaofen (10) umfassend eine aus einem Material mit geringer Wärmeleitung hergestellte Anordnung (11), welche geeignet ist zum Tragen eines Backraums (12) mit einem Boden (14), auf welchem die zu backenden Produkte (15) angeordnet werden, sowie einer Öffnung (17) zum Einschieben und Entnehmen der Produkte (15), und einen zum Aufnehmen von zu verbrennendem Holz geeigneten Feuerraum (13), wobei sich der Feuerraum (13) und der Boden im Wesentlichen auf einem gleichen Niveau befinden, **dadurch gekennzeichnet, dass**
- der Pizzaofen eine mit dem Feuerraum (13) in Verbindung stehende Öffnung hat, wobei die weitere Öffnung mit einer externen Einrichtung zum Beschicken des Feuerraums (13) mit Pellets (24) aus Holz aus einem entsprechenden Tank (20) verbunden ist;
- die Pellets (24) aus Presslingen aus Holzspänen mit sehr kleiner Granulometrie bestehen;
- eine Einrichtung die Zufuhr der in den Feuerraum (13) beförderten Pellets (24) entsprechend vorgegebener minimaler Portionen steuert, um im Feuerraum (13) eine minimale Brennstoffportion mit praktisch keiner Verteilung von Ascherückständen im Raum (12) sicherzustellen;
- die Steuereinrichtung zur Zufuhr der Pellets aus einem die Röhre (19) umfassenden Drosselmittel (25) besteht; und
- das Innere des Backraums (12) mit Temperatursensoren (31, 32) ausgestattet ist, welche mit einer elektronischen Steuereinheit (27) verbunden sind, welche die Zufuhr von Holzpellets (24) in den Feuerraum (13) regelt.

2. Pizzaofen (10) nach Anspruch 1, **dadurch gekennzeichnet, dass** die Granulometrie der Pellets im Bereich zwischen 6 mm und 7 mm liegt.

3. Pizzaofen (10) nach einem der vorhergehenden Ansprüche, **dadurch gekennzeichnet, dass** eine Arbeitsvorrichtng, welche von einer entsprechenden Antriebsquelle Energie erhält, die Pellets (24) vom Tank (20) zum Feuerraum (13) fördert.

4. Pizzaofen (10) nach Anspruch 3, **dadurch gekennzeichnet, dass** die Arbeitsvorrichtng aus einer in der Röhre (19) angeordneten Förderschnecke (34) besteht.

5. Pizzaofen (10) nach einem der Ansprüche 3 und 4, **dadurch gekennzeichnet, dass** die Antriebsquelle aus einem Elektromotor besteht, beispielsweise eines Invertertyps (35) oder mit einem Getriebemotor und einer getakteten Antriebseinrichtung.

6. Pizzaofen (10) nach einem der vorhergehenden Ansprüche, **dadurch gekennzeichnet, dass** der Feuerraum (13) mit einem mit der Steuereinheit (27) verbundenen Massewandler (13a) bestückt ist, welcher zum Erfassen der Menge der verbrennenden Pellets (24) vorgesehen ist.

7. Pizzaofen (10) nach einem der vorhergehenden Ansprüche, **dadurch gekennzeichnet, dass** das Drosselmittel (25) aus einem mit der elektronischen Steuereinheit (27) verbundenen Magnetventil besteht.

8. Pizzaofen (10) nach Anspruch 5, **dadurch gekennzeichnet, dass** der Elektromotor (35) mit der elektronischen Steuereinheit (37) verbunden ist.

9. Pizzaofen (10) nach einem der vorhergehenden Ansprüche, **dadurch gekennzeichnet, dass** ein von außen deutlich sichtbares und zugängliches Bedienfeld mit Displays ausgestattet ist, welche zum Anzeigen der Temperaturwerte im Backraum (12) und Feuerraum (13) zusammen mit der Menge an verbrauchtem Brennstoff (24) vorgesehen sind.

10. Pizzaofen (10) nach Anspruch 9, **dadurch gekennzeichnet, dass** das Bedienfeld mit einer Tastatur zum Programmieren der Arbeitsweise des Ofens (10) durch einen Benutzer ausgestattet ist.

## Revendications

1. Four à pizza (10) comprenant une structure (11), réalisée à partir d'un matériau à faible dispersion de chaleur, appropriée pour supporter une chambre de cuisson (12) comportant un plancher (14) sur lequel sont placés les produits (15) à cuire, ainsi qu'une ouverture (17) destinée à l'insertion et au retrait desdits produits (15), et un foyer (13) approprié pour recevoir du bois destiné à la combustion, ledit foyer (13) et ledit plancher étant sensiblement au même niveau, **caractérisé en ce que**
- ledit four à pizza comporte une autre ouverture ménagée en face dudit foyer (13), ladite autre ouverture étant reliée à un dispositif extérieur destiné à l'alimentation dudit foyer (13) en pastilles de bois (24) provenant d'un réservoir correspondant (20) ;
- lesdites pastilles (24) sont constituées de briquettes compressées de copeaux de bois de faible granulométrie ;
- un dispositif commande la délivrance desdites pastilles (24) dans ledit foyer (13) selon des doses minimales prédéterminées afin de garantir une dose minimale de combustible à l'intérieur du foyer (13) avec pratiquement aucune dispersion de cendres résiduelles à l'intérieur de la chambre (12) ;
- ledit dispositif de commande destiné à délivrer lesdites pastilles (24) est constitué de moyens d'étranglement (25) incluant ledit conduit (19) ; et
- l'intérieur de ladite chambre de cuisson (12) est doté de capteurs de température (31, 32) reliés à une unité de commande électronique (27) qui pilote la délivrance de pastilles de bois (24) dans le foyer (13).

2. Four à pizza (10) selon la revendication 1, **caractérisé en ce que** la granulométrie desdites pastilles est comprise entre 6 mm et 7 mm.

3. Four à pizza (10) selon l'une quelconque des revendications précédentes, **caractérisé en ce qu'**une machine de commande, recevant de l'énergie d'une source de mouvement correspondante, transporte lesdites pastilles (24) dudit réservoir (20) vers ledit four (13).

4. Four à pizza (10) selon la revendication 3, **caractérisé en ce que** ladite machine de commande est constituée d'un transporteur à vis sans fin (34) placé à l'intérieur dudit conduit (19).

5. Four à pizza (10) selon l'une quelconque des revendications 3 et 4, **caractérisé en ce que** ladite source de mouvement est constituée d'un moteur électrique, comportant par exemple un motoréducteur et un dispositif d'entraînement rythmique, ou du type inverseur (35).

6. Four à pizza (10) selon l'une quelconque des revendications précédentes, **caractérisé en ce que** ledit foyer (13) est équipé d'un transducteur de masse (13a) conçu pour détecter la quantité de pastilles (24) en cours de combustion, relié à ladite unité de commande (27).

7. Four à pizza (10) selon l'une quelconque des revendications précédentes, **caractérisé en ce que** lesdits moyens d'étranglement (25) sont constitués d'une électrovanne reliée à ladite unité de commande électronique (27).

8. Four à pizza (10) selon la revendication 5, **caractérisé en ce que** ledit moteur électrique (35) est relié à ladite unité de commande électronique (27).

9. Four à pizza (10) selon l'une quelconque des revendications précédentes, **caractérisé en ce qu'**une console clairement visible et accessible depuis l'extérieur est dotée de dispositifs d'affichage conçus pour présenter les valeurs de température régnant à l'intérieur de ladite chambre de cuisson (12) et dudit foyer (13) conjointement avec la quantité de combustible (24) consumée.

10. Four à pizza (10) selon la revendication 9, **caractérisé en ce que** ladite console est équipée d'un clavier permettant à un opérateur de programmer le fonctionnement du four (10).
